# EUROPEAN PATENT APPLICATION

(11) **EP 1 772 469 A2**
(43) Date of publication of application: **11.04.2007**
(21) Application number: 06020275.1
(22) Date of filing: 27.09.2006
(51) Int. Cl.: C08F 38/00, C08J 5/18

(54) **Polymer and film forming composition**

(30) Priority: 28.09.2005 JP 2005281710; 09.12.2005 JP 2005356715
(71) Applicant: FUJIFILM Corporation, Minato-ku Tokyo (JP)
(72) Inventor: Watanabe, Katsuyuki, Yoshida-cho Haibara-gun Shizuoka (JP); Hiraoka, Hidetoshi, Yoshida-cho Haibara-gun Shizuoka (JP)
(74) Representative: HOFFMANN EITLE

(57) **Abstract**

A polymer obtained by polymerizing a hydrocarbon monomer in a presence of a polymerization accelerator, wherein the polymer has stability at 400°C; a polymer obtained by polymerizing, in a presence of a polymerization initiator, a compound having a cage structure with at least 11 carbon atoms and a carbon-carbon triple bond; a film forming composition containing the polymer; an insulating film obtained using the composition; and an electronic device.

## Description

### Background of the Invention

### 1. Field of the Invention

The present invention relates to a polymer having a cage structure. More specifically, the invention pertains to an insulating film forming composition to be used for electronic devices or the like and superior in film properties such as dielectric constant and mechanical strength and moreover, an electronic device having an insulating film available by using the composition.

### 2. Description of the Related Art

In recent years, power consumption and delay time have increased because the progress of high integration, multifunction and high performance in the field of electronic materials has led to an increase in circuit resistance and condenser capacity between interconnects. Particularly, an increase of delay time becomes a large factor for the reduction of signal speed of devices and generation of crosstalk so that reduction of parasitic resistance and parasitic capacitance is required in order to reduce this delay time and accelerate the speed of devices. As one concrete measure for reducing this parasitic capacitance, an attempt has been made to cover the periphery of interconnects with a low-dielectric-constant interlayer insulating film. In addition, the interlayer insulating film is expected to have heat resistance high enough to withstand the thin film formation step at the time of producing a mount board and post steps such as chip connection and pin insertion and also chemical resistance high enough to withstand a wet process. Moreover, Al interconnects have recently been replaced by low resistance Cu interconnects and it is therefore common practice to carry out planarization by CMP (chemical mechanical polishing). The interlayer insulating film is therefore required to have mechanical resistance high enough to withstand this process.

Although polybenzoxazole and polyimide are widely known as materials for insulating films having high heat resistance, insulating films obtained from them are not satisfactory from the viewpoints of low dielectric constant, low water absorption, durability and hydrolysis resistance because they contain a hetero atom having high polarity such as oxygen atom or nitrogen atom.

High heat-resistant resins having polyarylene ether as a principal chain are known (U.S. Patent No. 5965679), but further reduction in dielectric constant is desired in order to actualize a high speed device.

For obtaining an insulating film having a reduced dielectric constant, use of a polymer skeleton composed of a saturated hydrocarbon having a small electronic polarizability is effective. A thermal polymer using, as a monomer, a diamantane having an ethynyl group as a substituent is disclosed in U.S. Patent No. 5017734. The polymer synthesized in accordance with the process as described in this specification, however, cannot be used for the film formation by spin coating because the polymer is insoluble in a coating solvent such as cyclohexanone suitably used for the fabrication of semiconductor devices.

### Summary of the Invention

The present invention relates to a polymer for overcoming the above-described problems. More specifically, the invention relates to a film forming composition to be used for electronic devices and capable of providing a film superior in film properties such as dielectric constant and mechanical strength; an insulating film available by using the composition; and an electronic device having the insulating film. (An "insulating film" is also referred to as a "dielectric film" or a "dielectric insulating film", and these terms are not substantially distinguished.)

The present inventors have found that the above-described problems can be overcome by the below-described constitution.
(1) A polymer obtained by polymerizing a hydrocarbon monomer in a presence of a polymerization accelerator,
   wherein the polymer has stability at 400°C.
(2) The polymer as described in (1) above, which has a solubility, at 25°C in cyclohexanone or anisole, of 3 mass% or greater.
(3) The polymer as described in (1) or (2) above, which is obtained by polymerizing, in a presence of a polymerization initiator, a compound having a cage structure with at least 11 carbon atoms and a carbon-carbon triple bond.
(4) The polymer as described in any of (1) to (3) above,
   wherein the compound having a cage structure is represented by formula (I): 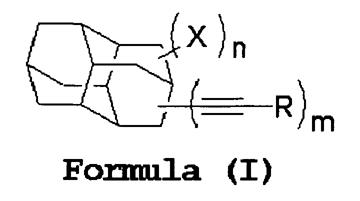 wherein when two or more R's are present, the R's each independently represents a hydrogen atom, an alkyl group, an alkenyl group, an alkynyl group, an aryl group, an alkoxycarbonyl group, an aryloxycarbonyl group, a carbamoyl group, an acyl group or a silyl group;
   m represents an integer of from 1 to 14;
   X represents any substituent; and
   n represents an integer of from 0 to 13.
(5) The polymer as described in any of (1) to (4) above,
   wherein the polymerization initiator is selected from the group consisting of organic peroxides and azo compounds.
(6) A film forming composition comprising a polymer as described in any of (1) to (5) above.
(7) A film forming composition comprising:
   a compound having a cage structure with at least 11 carbon atoms and a carbon-carbon triple bond; and
   a polymerization initiator.
(8) An insulating film formed by utilizing a film forming composition as described in (6) or (7) above.
(9) An electronic device comprising an insulating film as described in (8) above.

### Brief Description of the Drawings

FIG. 1 illustrates a ¹H-NMR chart of Polymer (D) obtained in Example 4;
FIG. 2 illustrates an FT-IR chart of a film before calcining of the film forming composition in Example 4; and
FIG. 3 illustrates an FT-IR chart of a film after calcining of the film forming composition in Example 4.

### Detailed Description of the Invention

The present invention will next be described specifically.

The invention relates to a polymer available by polymerizing a hydrocarbon monomer in the presence of a polymerization accelerator and having stability at 400°C.

The term "having stability at 400°C" as used herein means that supposing that the mass of the polymer is W1; the mass of the polymer, after heating from 25°C to 400°C at a heating rate of 10°C/min in an inert gas such as nitrogen or argon and maintaining the temperature at 400°C for 1 hour, is W2; and the mass of the polymer after further heating for 2 hours at 400°C is W3, the polymer satisfies the following equations simultaneously: 1.05 ≥ W2/W1 ≥ 0.70 and 1.02 ≥ W3/W2 ≥ 0.90. The polymer satisfies preferably the following equation: 1 ≥ W2/W1 ≥ 0.80, more preferably the following equation: 1 ≥ W2/W1 0.90, and most preferably the following equation: 1 ≥ W2/W1 ≥ 0.95. The polymer also satisfies preferably the following equation: 1 ≥ W3/W2 ≥ 0.95, more preferably the following equation: 1 ≥ W3/W2 ≥ 0.97, and most preferably the following equation: 1 ≥ W3/W2 ≥ 0.98.

Use of a polymer having stability at 400°C enables formation of an insulating film having highly uniform thickness and problems such as film peel which will otherwise occur owing to a decrease in film thickness and gas generation during the heating step included a semiconductor process can be avoided.

The term "hydrocarbon monomer" as used herein means a monomer in which the total mass of carbon atoms and hydrogen atoms is at least 60% of the total mass of the compound. From the viewpoint of a reduction in dielectric constant, the total mass of carbon atoms and hydrogen atoms is preferably 70% or greater, more preferably 80% or greater, most preferably 90% or greater, each based on the total mass of the compound.

The hydrocarbon monomer may be either an aromatic hydrocarbon monomer or a non-aromatic hydrocarbon monomer, but it is preferably a non-aromatic hydrocarbon monomer.

The term "non-aromatic hydrocarbon monomer" means a hydrocarbon monomer substantially free of an aromatic hydrocarbon ring such as benzene ring or naphthalene ring.

An insulating film having a low dielectric constant can be prepared using a polymer of the hydrocarbon monomer.

A non-aromatic hydrocarbon polymer can have improved heat resistance by increasing the number of crosslinks between carbon atoms. It can be accomplished, for example, by adjusting the number of ethynyl groups and/or vinyl groups to be bound to a monomer molecule to 3 or greater in total, exposing an insulating film to radiation to increase the number of crosslinks between polymers or making use of a monomer having a cage structure composed of hydrocarbons.

The polymer can have a low dielectric constant by adjusting a ratio of aromatic rings, in terms of the number of carbon atoms, to 50% or less, preferably 30% or less, especially preferably 10% or less in the whole polymer.

The term "cage structure" as used herein means a molecule in which plural rings formed of covalent-bonded atoms define the capacity of the structure and in which all points existing inside the capacity cannot leave the capacity without passing through the rings. For example, an adamantane structure may be considered as the cage structure. On the other hand, a cyclic structure having a single crosslink which norbornane (bicyclo[2,2,1]heptane) or the like has cannot be considered as the cage structure since the ring of the single-crosslinked cyclic compound does not define the capacity of the compound.

The cage structure of the invention is characterized in that it is formed of at least 11 carbon atoms. The cage structure is composed of preferably from 11 to 30 carbon atoms, more preferably from 12 to 20 carbon atoms, still more preferably from 12 to 14 carbon atoms. When the cage structure composed of at least 11 carbon atoms is employed, electronic polarizability of a film lowers. In addition, a space is formed in the film owing to an increase in the bulkiness of the cage structure, which leads to a sufficient reduction in the dielectric constant. Moreover, it has been found that the cage structure with a greater number of carbon atoms exhibits an unexpected effect, that is, enhancement of mechanical strength.

The carbon atoms as described herein do not embrace the carbon atoms of the linking group or the substituent bound to the cage structure. For example, 1-methyladamantane is regarded to be composed of 10 carbon atoms.

In the invention, the cage structure may contain either a saturated bond or an unsaturated bond, or it may contain a hetero atom such as oxygen, nitrogen or sulfur.

The cage structure with at least 11 carbon atoms according to the invention is preferably a saturated aliphatic hydrocarbon from the standpoint of a low dielectric constant and examples of it include diamantane, triamantane, tetramantane and dodecahedrane. Of these, diamantane is especially preferred from the standpoints of low dielectric constant, high mechanical strength, good solubility in a coating solvent and suitability for production.

The compound having a cage structure according to the invention contains at least one carbon-carbon triple bond.

The cage structure in the invention is preferably monovalent to tetravalent, more preferably monovalent to trivalent, especially preferably divalent.

The group to be bound to the cage structure may be a substituent having a valence of one or more or a linking group having a valence of two or more.

The compound having a cage structure according to the invention has preferably a molecular weight of from 150 to 3000, more preferably from 200 to 2000, especially preferably from 220 to 1000.

The compound having a cage structure is especially preferably a compound represented by the following formula (I):

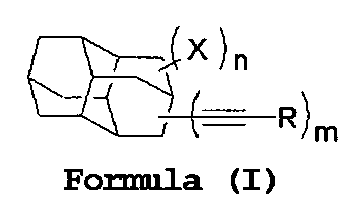

In the formula (I),
R represents a hydrogen atom, an alkyl group (preferably, a C₁₋₁₀ alkyl group), an alkenyl group (preferably, a C₂₋₁₀ alkenyl group), an alkynyl group (preferably, a C₂₋₁₀ alkynyl group), an aryl group (preferably, a C₆₋₂₀ aryl group), an alkoxycarbonyl group (preferably, a C₂₋₁₀ alkoxycarbonyl group), an aryloxycarbonyl group (preferably, a C₇₋₂₀ aryloxycarbonyl group), a carbamoyl group (preferably, a C₁₋₁₀ carbamoyl group), an acyl group (preferably, a C₂₋₁₀ acyl group), or a silyl group (preferably, a C₀₋₂₀ silyl group). Of these, hydrogen atom, alkyl group (preferably, C₁₋₁₀ alkyl group), aryl group (preferably, C₆₋₂₀ aryl group), alkoxycarbonyl group (preferably, C₂₋₁₀ alkoxycarbonyl group), carbamoyl group (preferably, C₁₋₁₀ carbamoyl group), acyl group (preferably, C₂₋₁₀ acyl group), or silyl group (preferably, C₀₋₂₀ silyl group) are more preferred, with hydrogen atom and silyl group (preferably, C₀₋₂₀ silyl group) being especially preferred.

The letter m represents an integer of from 1 to 14, preferably 1 to 4, more preferably 1 to 3, especially preferably 2.

X represents any substituent. Examples of it include halogen atoms (fluorine atom, chlorine atom, bromine atom and iodine atom), linear, branched or cyclic C₁₋₁₀ alkyl groups (such as methyl, t-butyl, cyclopentyl and cyclohexyl), C₂₋₁₀ alkenyl groups (such as vinyl and propenyl), C₆₋₂₀ aryl groups (phenyl, 1-naphthyl and 2-naphthyl), C₂₋₁₀ acyl groups (such as benzoyl), C₆₋₂₀ aryloxy groups (such as phenoxy), C₆₋₂₀ arylsulfonyl groups (such as phenylsulfonyl), nitro group, cyano group, and silyl groups (such as triethoxysilyl, methyldiethoxysilyl and trivinylsilyl). Of these, preferred are fluorine atom, bromine atom, linear, branched or cyclic C₁₋₅ alkyl groups, C₂₋₅ alkenyl groups and silyl groups. These substituents may be substituted further with another substituent.

The letter "n" represents an integer of from 0 to 13, preferably from 0 to 2, more preferably 0.

As the compound of the invention represented by the formula (I), 1-ethynyldiamantane, 4-ethynyldiamantane, 4,9-diethynyldiamantane, 1,6-diethynyldiamantane, 1,4-diethynyldiamantane, and 1,4,9-triethynyldiamantane are more preferred, with 4,9-ethynyldiamantane and 1,6-diethynyldiamantane being especially preferred.

Specific examples of the compound of the invention having a cage structure with at least 11 carbon atoms and a carbon-carbon triple bond will hereinafter be described, but the present invention is not limited to or by them.

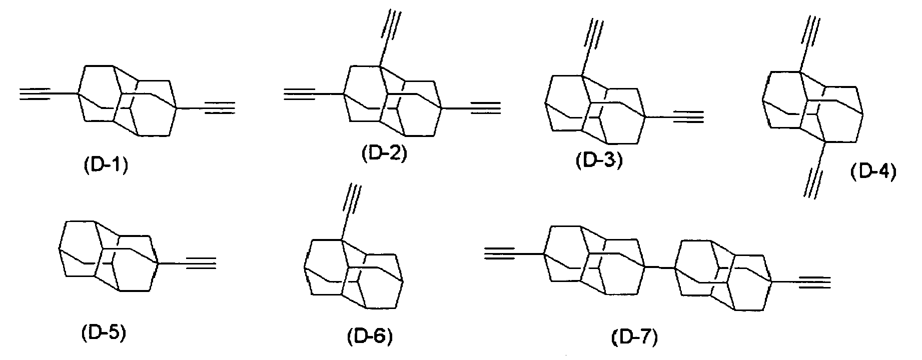

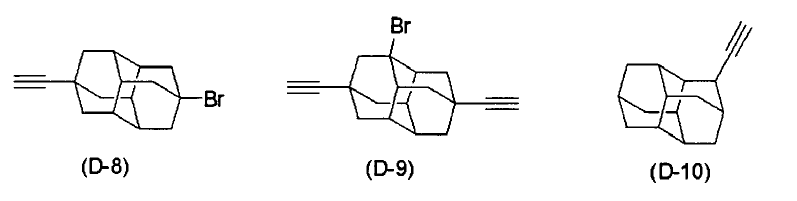

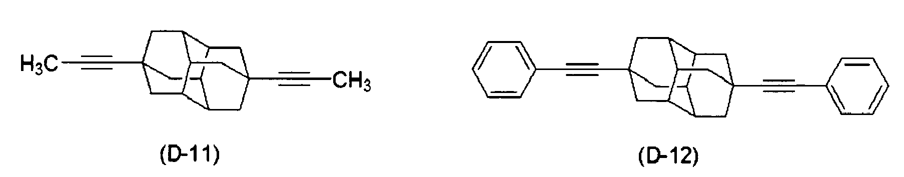

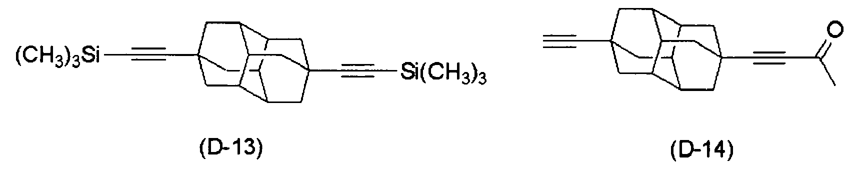

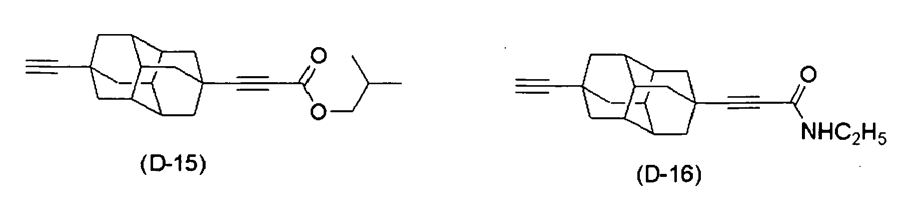

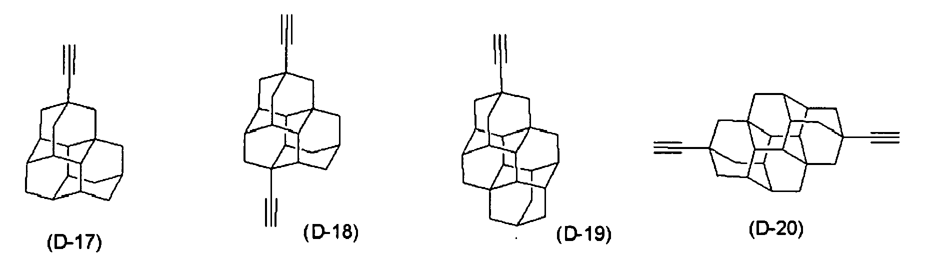

It is especially preferred that the compound of the invention having a cage structure and the polymer of the invention each does not contain a nitrogen atom in view of dielectric constant and hygroscopic property of the film. It is more preferred that each of them is a compound other than polyimide, in other words, a compound free of a polyimide bond.

The polymer of the invention is characterized in that it is available by polymerizing, in the presence of a polymerization accelerator, a hydrocarbon monomer. The term "polymerization accelerator" as used herein means an additive for accelerating the polymerization of a crosslinking group. Examples of it include radical polymerization initiators and transition metal catalysts.

The polymer of the invention is preferably available by polymerizing the above-described compound having a cage structure with at least 11 carbon atoms and acetylenic triple bond in the presence of a polymerization initiator (preferably, a nonmetal radical polymerization initiator). Use of a metal catalyst may become a cause for mixing of metal impurities in the film forming composition, but use of a nonmetal radical polymerization initiator is advantageous because it does not cause such a problem.

The polymerization initiator usable in the invention preferably exhibits activity, generating free radicals such as carbon radicals or oxygen radicals by heating. Organic peroxides and organic azo compounds are especially preferred.

Preferred examples of the organic peroxides include ketone peroxides such as "PERHEXA H", peroxyketals such as "PERHEXA TMH", hydroperoxides such as "PERBUTYL H-69", dialkylperoxides such as "PERCUMYL D", "PERBUTYL C" and "PERBUTYL D", diacyl peroxides such as "NYPER BW", peroxy esters such as "PERBUTYL Z" and "PERBUTYL L", and peroxy dicarbonates such as "PEROYL TCP", (each, trade name; commercially available from NOF Corporation), diisobutyryl peroxide, cumylperoxyneodecanoate, di-n-propylperoxydicarbonate, diisopropylperoxydicarbonate, di-sec-butylperoxydicarbonate, 1,1,3,3-tetramethylbutylperoxyneodecanoate, di(4-t-butylchlorohexyl)peroxydicarbonate, di(2-ethylhexyl)peroxydicarbonate, t-hexylperoxyneodecanoate, t-butylperoxyneodecanoate, t-butylperoxyneoheptanoate, t-hexylperoxypivalate, t-butylperoxypivalate, di(3,5,5-trimethylhexanoyl) peroxide, dilauroyl peroxide, 1,1,3,3-tetramethylbutylperoxy-2-ethylhexanoate, disuccinic acid peroxide, 2,5-dimethyl-2,5-di(2-ethylhexanoylperoxy)hexane, t-hexylperoxy-2-ethylhexanoate, di(4-methylbenzoyl) peroxide, t-butylperoxy-2-ethylhexanoate, di(3-methylbenzoyl) peroxide, benzoyl(3-methylbenzoyl) peroxide, dibenzoyl peroxide, 1,1-di(t-butylperoxy)-2-methylcyclohexane, 1,1-di(t-hexylperoxy)-3,3,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butylperoxymaleic acid, t-butylperoxy-3,5,5-trimethylhexanoate, t-butyolperoxylaurate, t-butylperoxyisopropylmonocarbonate, t-butylperoxy-2-ethylhexylmonocarbonate, t-hexylperoxybenzoate, 2,5-dimethyl-2,5-di(benzoylperoxy)hexane, t-butylperoxyacetate, 2,2-di-(t-butylperoxy)butane, t-butylperoxybenzoate, n-butyl-4,4-dit-butylperoxyvalerate, di(2-t-butylperoxyisopropyl)benzene, dicumyl peroxide, di-t-hexyl peroxide, 2,5-dimethyl-2,5-di(t-butylperoxy)hexane, t-butylcumyl peroxide, di-t-butyl peroxide, p-methane hydroperoxide, 2,5-dimethyl-2,5-di(t-butylperoxy)hexine-3, diisopropylbenzene hydroperoxide, 1,1,3,3-tetramethylbutyl hydroperoxide, cumene hydroperoxide, t-butyl hydroperoxide, 2,3-dimethyl-2,3-diphenylbutane, 2,4-dichlorobenzoyl peroxide, o-chlorobenzoyl peroxide, p-chlorobenzoyl peroxide, tris-(t-butylperoxy)triazine, 2,4,4-trimethylpentylperoxyneodecanoate, α-cumylperoxyneodecanoate, t-amylperoxy-2-ethylhexanoate, t-butylperoxyisobutyrate, di-t-butylperoxyhexahydroterephthalate, di-t-butylperoxytrimethylazipate, di-3-methoxybutylperoxydicarbonate, di-isopropylperoxydicarbonate, t-butylperoxyisopropylcarbonate, 1,6-bis(t-butylperoxycarbonyloxy)hexane, diethylene glycol bis(t-butylperoxycarbonate) and t-hexylperoxyneodecanoate.

Examples of the organic azo compound include azonitrile compounds such as "V-30", "V-40", "V-59", "V-60", "V-65" and "V-70", azoamide compounds such as "VA-080", "VA-085", "VA-086", "VF-096", "VAm-110" and "VAm-111", cyclic azoamidine compounds such as "VA-044" and "VA-061", and azoamidine compounds such as "V-50" and VA-057" (each, trade name; commercially available from Wako Pure Chemical Industries), 2,2-azobis(4-methoxy-2,4-dimethylvaleronitrile), 2,2-azobis(2,4-dimethylvaleronitrile), 2,2-azobis(2-methylpropionitrile), 2,2-azobis(2,4-dimethylbutyronitrile), 1,1-azobis(cyclohexane-1-carbonitrile), 1-[(1-cyano-1-methylethyl)azo]formamide, 2,2-azobis{2-methyl-N-[1,1-bis(hydroxymethyl)-2-hydroxyethyl]propionamide}, 2,2-azobis[2-methyl-N-(2-hydroxybutyl)propionamide], 2,2-azobis[N-(2-propenyl)-2-methylpropionamide], 2,2-azobis(N-butyl-2-methylpropionamide), 2,2-azobis(N-cyclohexyl-2-methylpropionamide), 2,2-azobis[2-(2-imidazolin-2-yl)propane]dihydrochloride, 2,2-azobis[2-(2-imidazolin-2-yl)]propane]disulfate dihydrate, 2,2-azobis{2-[1-(2-hydroxyethyl)-2-imidazolin-2-yl]propane}dihydrochloride, 2,2-azobis[2-[2-imidazolin-2-yl]propane], 2,2-azobis(1-imino-1-pyrrolidino-2-methylpropane)dihydrochloride, 2,2-azobis(2-methylpropionamidine)dihydrochloride, 2,2-azobis[N-(2-carboxyethyl)-2-methylpropionamidine]tetrahydrate, dimethyl-2,2-azobis(2-methylpropionate), 4,4-azobis(4-cyanovaleric acid) and 2,2-azobis(2,4,4-trimethylpentane).

In the invention, these polymerization initiators may be used either singly or in combination.

The amount of the polymerization initiator of the invention is preferably from 0.0001 to 1 mole, more preferably from 0.001 to 0.5 mole, still more preferably from 0.01 to 0.2 mole, per mole of the compound, as a monomer, having a cage structure with at least 11 carbon atoms and a carbon-carbon triple bond.

In the present invention, the polymerization reaction of a monomer may be effected in the presence of a transition metal catalyst. For example, it is preferred to carry out polymerization of a monomer having a polymerizable carbon-carbon double bond or carbon-carbon triple bond in the presence of a Pd catalyst such as Pd(PPh₃)₄ or Pd(OAc)₂, a Ziegler-Natta catalyst, an Ni catalyst such as nickel acetyl acetonate, a W catalyst such as WCl₆, an Mo catalyst such as MoCl₅, a Ta catalyst such as TaCl₅, an Nb catalyst such as NbCl₅, an Rh catalyst or a Pt catalyst.

In the present invention, these transition metal catalysts may be used either singly or in combination.

The amount of the transition metal catalyst is preferably from 0.001 to 2 moles, more preferably from 0.01 to 1 mole, especially preferably from 0.05 to 0.5 mole per mole of the monomer.

As the solvent to be used for polymerization reaction, any solvent capable of dissolving therein a raw material monomer having a necessary concentration and having no adverse effects on the properties of a film formed from the resulting polymer can be used. Examples include water; alcohol solvents such as methanol, ethanol and propanol; ketone solvents such as alcohol acetone, methyl ethyl ketone, methyl isobutyl ketone, cyclohexanone and acetophenone; ester solvents such as ethyl acetate, butyl acetate, propylene glycol monomethyl ether acetate, γ-butyrolactone, and methyl benzoate; ether solvents such as dibutyl ether and anisole; aromatic hydrocarbon solvents such as toluene, xylene, mesitylene and 1,3,5-triisopropylbenzene; amide solvents such as N-methylpyrrolidinone and dimethylacetamide; halogen solvents such as carbon tetrachloride, dichloromethane, chloroform, 1,2-dichloroethane, chlorobenzene, 1,2-dichlorobenzene and 1,2,4-trichlorobenzene; and aliphatic hydrocarbon solvents such as hexane, heptane, octane and cyclohexane. Of these, more preferred are acetone, methyl ethyl ketone, methyl isobutyl ketone, cyclohexanone, acetophenone, ethyl acetate, propylene glycol monomethyl ether acetate, γ-butyrolactone, anisole, tetrahydrofuran, toluene, xylene, mesitylene, 1,3,5-triisopropylbenzene, 1,2-dichloroethane, chlorobenzene, 1,2-dichlorobenzene and 1,2,4-trichlorobenzene; still more preferred are tetrahydrofuran, γ-butyrolactone, anisole, toluene, xylene, mesitylene, 1,3,5-triisopropylbenzene, 1,2-dichloroethane, chlorobenzene, 1,2-dichlorobenzene and 1,2,4-trichlorobenzene, of which γ-butyrolactone, anisole, mesitylene, 1,3,5-triisopropylbenzene, 1,2-dichlorobenzene and 1,2,4-trichlorobenzene are especially preferred. These solvents may be used either singly or in combination.

The concentration of the monomer in the reaction mixture is preferably from 1 to 50 mass%, more preferably from 5 to 30 mass%, especially preferably from 10 to 20 mass%. (In this specification, mass ratio is equal to weight ratio.)

The optimum conditions for the polymerization reaction in the invention differ, depending on the kind or concentration of the polymerization initiator, monomer or solvent. The reaction is conducted at an internal temperature of preferably from 0 to 200°C, more preferably from 50 to 170°C, especially preferably from 100 to 150°C for preferably from 1 to 50 hours, more preferably from 2 to 20 hours, especially preferably from 3 to 10 hours.

In order to suppress the inactivation of the polymerization initiator due to oxygen, the reaction is performed preferably in an inert gas atmosphere (such as nitrogen or argon). The oxygen concentration during the reaction is preferably 100 ppm or less, more preferably 50 ppm or less, especially preferably 20 ppm or less.

The polymer obtained by polymerization has a weight average molecular weight of preferably from 1000 to 500000, more preferably from 5000 to 300000, especially preferably from 10000 to 200000.

The compound of the invention having a cage structure and a carbon-carbon triple bond can be synthesized, for example, by reacting commercially available diamantane, as a raw material, with bromine in the presence or absence of an aluminum bromide catalyst to introduce a bromine atom into a desired position, effecting Friedel-Crafts reaction between the reaction product and vinyl bromide in the presence of a Lewis acid such as aluminum bromide, aluminum chloride or iron chloride to introduce a 2,2-dibromoethyl group into the product, and treating it with a strong base for HBr removal, thereby converting the 2,2-dibromoethyl group into an ethynyl group. More specifically, it can be synthesized in accordance with the process as described in Macromolecules, 24, 5266-5268(1991), Macromolecules, 28, 5554-5560(1995), Journal of Organic Chemistry, 39, 2995-3003(1974) or the like.

Alternatively, an alkyl or silyl group can be introduced by making the hydrogen atom of the terminal acetylene group into the corresponding anion with butyl lithium or the like and then reacting it with an alkyl halide or silyl halide.

The solubility of the polymer is preferably 3 mass% or greater in cyclohexanone or anisole at 25°C, more preferably 3 mass% or greater in cyclohexanone at 25°C.

In order to prevent precipitation of insoluble matters with the passage of time during storage of the coating solution, the polymer has preferably a higher solubility. The solubility of the polymer in cyclohexanone or anisole at 25°C is more preferably 7 mass% or greater, especially preferably 10 mass% or greater.

The polymer of the invention may be used alone or two or more polymers may be used in combination.

The film forming composition of the invention contains the above-described polymer, or the above-described compound having a cage structure with at least 11 carbon atoms and a carbon-carbon triple bond and the above-described polymerization initiator.

The film forming composition of the invention can be used as a coating solution after dissolved in a solvent. No particular limitation is imposed on the coating solvent. Examples include alcohol solvents such as methanol, ethanol, isopropanol, 1-butanol, 2-ethoxymethanol and 3-methoxypropanol; ketone solvents such as acetone, acetylacetone, methyl ethyl ketone, methyl isobutyl ketone, 2-pentanone, 3-pentanone, 2-heptanone, 3-heptanone and cyclohexanone; ester solvents such as ethyl acetate, propyl acetate, butyl acetate, isobutyl acetate, pentyl acetate, ethyl propionate, propyl propionate, butyl propionate, isobutyl propionate, propylene glycol monomethyl ether acetate, methyl lactate, ethyl lactate and γ-butyrolactone; ether solvents such as diisopropyl ether, dibutyl ether, ethyl propyl ether, anisole, phenetole and veratrol; aromatic hydrocarbon solvents such as mesitylene, ethylbenzene, diethylbenzene, propylbenzene and 1,2-dichlorobenzene; and amide solvents such as N-methylpyrrolidinone and dimethylacetamide. These solvents may be used either singly or in combination.

Of these, acetone, propanol, cyclohexanone, propylene glycol monomethyl ether acetate, methyl lactate, ethyl lactate, γ-butyrolactone, anisole, mesitylene and 1,2-dichlorobenzene are more preferred, with cyclohexanone, propylene glycol monomethyl ether acetate, γ-butyrolactone and anisole being especially preferred.

The solid concentration of the film forming composition of the invention is preferably from 3 to 50 mass%, more preferably from 4 to 15 mass%, especially preferably from 5 to 10 mass%.

The metal content, as an impurity, of the film forming composition of the invention is preferably as small as possible. The metal content is preferably 10 ppm or less, more preferably 1 ppm or less, especially preferably 100 ppb or less.

Moreover, additives such as radical generator, nonionic surfactant, nonionic fluorosurfactant, silane coupling agent and adhesive may be added to the film forming composition of the invention insofar as they do not impair the various properties (heat resistance, dielectric constant, mechanical strength, coating properties, adhesion and the like) of an insulating film thus obtained.

Examples of the nonionic surfactant include octyl polyethylene oxide, decyl polyethylene oxide, dodecyl polyethylene oxide, octyl polypropylene oxide, decyl polypropylene oxide and dodecyl polypropylene oxide. Examples of the nonionic fluorosurfactant include perfluorooctyl polyethylene oxide, perfluorodecyl polyethylene oxide and perfluorododecyl polyethylene oxide. Examples of the silane coupling agent include vinyl trimethoxysilane, vinyltriethoxysilane, vinyltriacetoxysilane, allyltrimethoxysilane, allyltriethoxysilane, divinyldiethoxysilane and trivinylethoxysilane.

There exists a suitable range of the amount of the additive to be added, depending on the using purpose of the additive or solid concentration of the coating solution. In general, the amount (mass%) in the coating solution is preferably from 0.001% to 10%, more preferably from 0.01% to 5%, especially preferably from 0.05% to 2%.

By the addition, in advance, of a foaming agent to the film forming composition of the invention, a porous film can be formed. This enables reduction in dielectric constant of the film. Although no particular limitation is imposed on the foaming agent to be added to form a porous film, an organic compound having a higher boiling point than that of the solvent of the coating solution, a thermally decomposable low molecular compound, thermally decomposable polymer or the like can, for example, be used.

Specific examples of a polymer usable as the foaming agent (pore forming agent) include polyvinyl aromatic compounds (such as polystyrene, polyvinylpyridine and halogenated polyvinyl aromatic compounds), polyacrylonitrile, polyalkylene oxides (such as polyethylene oxide and polypropylene oxide), polyethylene, polylactic acid, polysiloxane, polycaprolactone, polycaprolactam, polyurethane, polymethacrylates (such as polymethyl methacrylate), polymethacrylic acid, polyacrylates (such as polymethyl acrylate), polyacrylic acid, polydienes (such as polybutadiene and polyisoprene), polyvinyl chloride, polyacetal and amine-capped alkylene oxides. In addition, also usable are polyphenylene oxide, poly(dimethylsiloxane), polytetrahydrofuran, polycyclohexylethylene, polyethyloxazoline, polyvinylpyridine and polycaprolactone.

In particular, polystyrene is suited as the pore forming agent. As the polystyrene, an anionically polymerization polystyrene, syndiotactic polystyrene, and unsubstituted or substituted polystyrene (for example, poly(α-methylstyrene)) are usable, of which unsubstituted polystyrene is preferred.

Examples of the thermoplastic polymer usable as a foaming agent (pore forming agent) include polyacrylate, polymethacrylate, polybutadiene, polyisoprene, polyphenylene oxide, polypropylene oxide, polyethylene oxide, poly(dimethylsiloxane), polytetrahydrofuran, polyethylene, polycyclohexylethylene, polyethyloxazoline, polycaprolactone, polylactic acid and polyvinylpyridine.

The amount of the foaming agent to be added is preferably from 1 to 50 mass%, more preferably from 5 to 30 mass%, especially preferably from 10 to 20 mass% based on the mass of the polymer used for the formation of the film.

A film available by using the film forming composition of the invention can be formed by applying the film forming composition to a substrate by a desirable method selected from spin coating, roller coating, dip coating, scanning and the like; and then distilling off the solvent by heating. No particular limitation is imposed on the heat treatment method and an ordinarily employed method, for example, heating using a hot plate or heating furnace, or heating by exposure to the light of a xenon lamp by using RTP (rapid thermal processor) or the like can be employed.

It is especially preferred to cure (calcination) the polymer of the invention by heating after application of it to a substrate. For example, polymerization reaction during post-heat treatment of a carbon triple bond remaining in the polymer can be utilized for it. This post-heat treatment is performed at a temperature of preferably from 100 to 450°C, more preferably from 200 to 420°C, especially preferably from 350 to 400°C for preferably from 1 minute to 2 hours, more preferably from 10 minutes to 1.5 hours, especially preferably from 30 minute to 1 hour.

The post-heat treatment may be performed in several stages. It is especially preferred to carry out this post-heat treatment in a nitrogen atmosphere in order to prevent thermal oxidation by oxygen.

The film available by using the film forming composition of the invention can be used for a variety of purposes, for example, it is suited as an insulating film in electronic parts such as semiconductor device and multichip module multilayer wiring board. It can also be used as, in addition to an interlayer insulating film for semiconductor, surface protection film and a buffer coat film, a passivation film in LSI, α-ray shielding film, cover lay film of a flexographic plate, overcoat film, cover coat of a flexible copper-lined plate, solder resist film, or liquid-crystal alignment film.

As another using purpose, it can be used as a conductive film by doping the film of the invention with an electron donor or acceptor, thereby imparting it with conductivity.

### [Example 1]

The present invention will hereinafter be described by Examples. It should however be borne in mind that the scope of the invention is not limited to or by them.

### <Example 1>

In accordance with the synthesis process as described in Macromolecules, 5266(1991), 4,9-diethynyldiamantane was synthesized. In the next place, 2 g of the resulting 4,9-diethynyldiamantane, 0.4 g of dicumyl peroxide ("PERCUMYL D", trade name; product of NOF Corporation) and 10 ml of orthodichlorobenzene were stirred at an internal temperature of 140°C for 5 hours under a nitrogen stream for polymerization. After the reaction mixture was cooled to room temperature, it was added to 100 ml of methanol. The solid thus precipitated was collected by filtration and washed with methanol, whereby 1.0 g of Polymer (A) having a weight average molecular weight of about 14000 was obtained.

The solubility of Polymer (A) in cyclohexanone was 20 mass% or greater at 25°C.

A coating solution was prepared by completely dissolving 1.0 g of Polymer (A) in 10 g of cyclohexanone. The resulting solution was filtered through a 0.1-µm filter made of tetrafluoroethylene and then, spin-coated onto a silicon wafer. The resulting film was heated at 250°C for 60 seconds on a hot plate under a nitrogen stream, and then cured (calcined) for 60 minutes in an oven of 400°C purged with nitrogen. As a result, a uniform 0.5-µm thick film with no foreign matters formed therein was formed. The dielectric constant of the film thus obtained was calculated from the capacitance value at 1 MHz by using a mercury probe (product of Four Dimensions) and "HP 4285A LCR meter" (trade name; product of Yokogawa Hewlett Packard), and it was 2.42. As a result of measurement by using "Nano Indenter SA2" (trade name; product of MTS Systems), the Young's modulus (at 25°C) of the film was 8.0 GPa.

Supposing that the mass of Polymer (A) was W1; the mass of Polymer (A), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (A) after further heating for 2 hours at 400°C was W3, the polymer satisfied the following equations: W2/W1 = 0.98 and W3/W2 = 0.99.

### <Example 2>

Polymerization was carried out by stirring 2 g of 4,9-diethynyldiamantane, 1,1'-azobis(cyclohexane-1-carbonitrile) ("V-40", trade name; product of Wako Pure Chemical Industries) and 10 ml of chlorobenzene at an internal temperature of 100°C for 8 hours under a nitrogen stream. After the reaction mixture was cooled to room temperature, it was added to 100 ml of methanol. The solid thus precipitated was collected by filtration and washed with methanol, whereby 1.0 g of Polymer (B) having a weight average molecular weight of about 10000 was obtained.

The solubility of Polymer (B) in cyclohexanone was 15 mass% or greater at 25°C.

A coating solution was prepared by completely dissolving 1.0 g of Polymer (B) in 10 g of cyclohexanone. The resulting solution was filtered through a 0.1-µm filter made of tetrafluoroethylene and then, spin-coated onto a silicon wafer. The resulting film was heated at 250°C for 60 seconds on a hot plate under a nitrogen stream, and then cured (calcined) for 60 minutes in an oven of 400°C purged with nitrogen. As a result, a uniform 0.5-µm thick film with no foreign matters formed therein was formed. The resulting film has a dielectric constant of 2.43 and Young's modulus (at 25°C) of 7.8 GPa.

Supposing that the mass of Polymer (B) was W1; the mass of Polymer (B), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (B) after further heating for 2 hours at 400°C was W3, the polymer satisfied the following equations: W2/W1 = 0.98 and W3/W2 = 0.99.

### <Example 3>

In a similar manner to Example 1 except for the use of 1,6-diethynyldiamantane instead of 4,9-diethynyldiamantane, 0.9 g of Polymer (C) was synthesized. As a result of GPC measurement, the polymer had a weight average molecular weight of about 20000.

The solubility of Polymer (C) in cyclohexanone was 15 mass% or greater at 25°C.

A 10 mass% solution of the polymer in cyclohexanone was prepared and filtered through a 0.2-µm filter made of TFE and then, spin-coated onto a silicon wafer. The resulting film was heated at 400°C for 60 minutes in a furnace purged with nitrogen. As a result, a uniform 0.5-µm thick film with no foreign matters formed therein was formed.

The resulting film has a dielectric constant of 2.37 and Young's modulus (at 25°C) of 7.5 GPa.

Supposing that the mass of Polymer (C) was W1; the mass of Polymer (C), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (C) after further heating for 2 hours at 400°C was W3, the polymer satisfied the following equations: W2/W1 = 0.98 and W3/W2 = 0.99.

### <Example 4>

Polymerization was carried out by stirring 2 g of 4,9-diethynyldiamantane, 0.22 g of dicumyl peroxide ("PERCUMYL D", trade name; product of NOF Corporation) and 10 ml of t-butylbenzene at an internal temperature of 150°C for 5 hours in a nitrogen stream. After the reaction mixture was cooled to room temperature, it was added to 100 ml of isopropyl alcohol. The solid thus precipitated was collected by filtration and washed sufficiently with isopropyl alcohol, whereby 1.0 g of Polymer (D) having a weight average molecular weight of about 14000 was obtained.

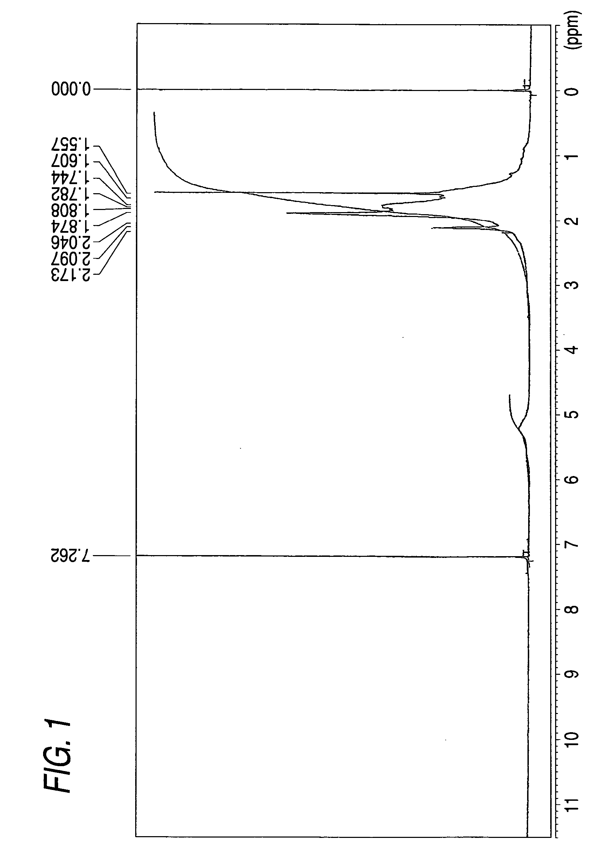

The ¹H-NMR chart of Polymer (D) is shown in FIG. 1.
Conditions: CDCl₃ solvent, 400 MHz, TMS

The solubility of Polymer (D) in cyclohexanone was 20 mass% or greater at 25°C.

A coating solution was prepared by completely dissolving 1.0 g of Polymer (D) in 10 g of cyclohexanone. The resulting solution was filtered through a 0.1-µm filter made of tetrafluoroethylene and then, spin-coated onto a silicon wafer. The resulting film was heated at 250°C for 60 seconds on a hot plate in a nitrogen stream, whereby the solvent was distilled off. The film was cured (calcined) further for 60 minutes in an oven of 400°C purged with nitrogen. As a result, a uniform 0.5-µm thick film with no foreign matters formed therein was formed.

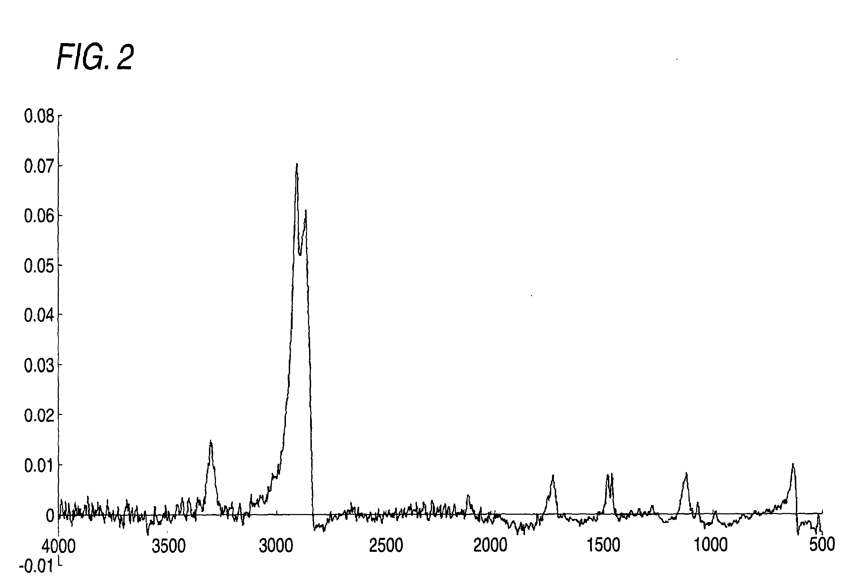

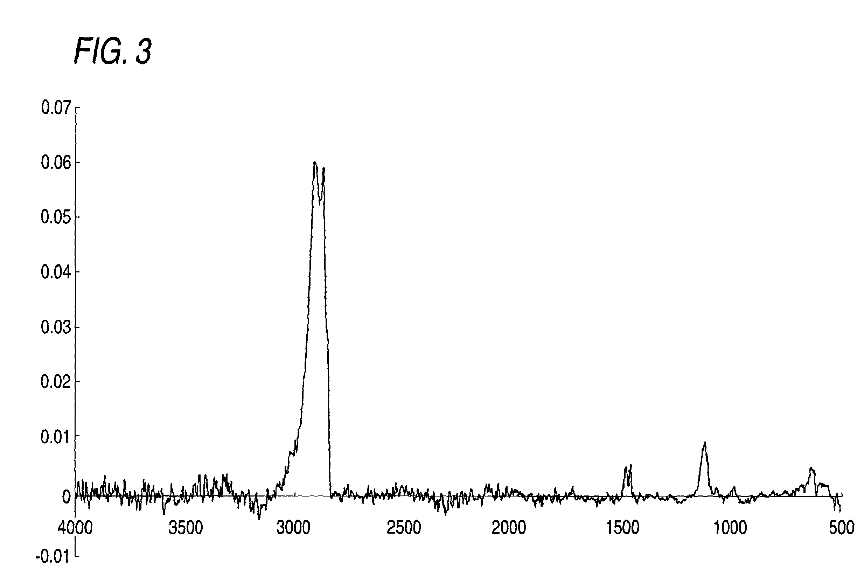

The FT-IR chart of the film before calcining is shown in FIG. 2, while that after calcining is shown in FIG. 3. A thin film on the silicon wafer was measured.

The dielectric constant of the film thus obtained was calculated from the capacitance value at 1 MHz by using a mercury probe (product of Four Dimensions) and "HP 4285A LCR meter" (trade name; product of Yokogawa Hewlett Packard), and it was 2.42. As a result of measurement by using "Nano Indenter SA2" (trade name; product of MTS Systems), the Young's modulus (at 25°C) of the film was 8.0 GPa.

Supposing that the mass of Polymer (D) was W1; the mass of Polymer (D), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (D) after further heating for 2 hours at 400°C was W3, the polymer satisfied the following equations: W2/W1 = 0.98 and W3/W2 = 0.99.

### <Example 5>

In a similar manner to Example 1 except for the use of 1,3-diethynyladamantane instead of 4,9-diethynyldiamantane, 0.7 g of Polymer (E) was synthesized. As a result of GPC measurement, the polymer had a weight average molecular weight of about 20000.

A film was formed using Polymer (E) in accordance with the process of Example 1. The resulting film had a dielectric constant of 2.55 and Young's modulus (25°C) of 3.0 GPa.

Supposing that the mass of Polymer (E) was W1; the mass of Polymer (E), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (E) after further heating for 2 hours at 400°C was W3, the polymer satisfied the following equations: W2/W1 = 0.80 and W3/W2 = 0.94.

### <Comparative Example 1>

In accordance with the process as described in Example 11 of U.S. Patent No. 5017734, a polymer of 4,9-diethynyldiamantane was prepared. The resulting polymer was insoluble in a solvent such as cyclohexanone, γ-butyrolactone, propylene glycol monomethyl ether acetate, anisole or dichlorobenzene and an applicable coating solution was not prepared.

### <Comparative Example 2>

In 18 g of anisole was dissolved 2 g of 1,3,5-triethynyladamantane, followed by stirring at 150°C for 10 hours, but no polymer was prepared and raw materials were collected.

### <Comparative Example 3>

In 9 g of anisole was dissolved 1 g of 1-ethynyladamantane, followed by stirring at 220°C for 100 hours. After the reaction mixture was cooled to room temperature, it was added to 100 ml of isopropyl alcohol. The solid thus precipitated was filtered and washed sufficiently with isopropyl alcohol. As a result, 0.2 g of Polymer (F) having a weight average molecular weight of about 10000 was obtained.

The solubility of Polymer (F) in cyclohexanone was 20 mass% or greater at 25°C.

A coating solution was prepared by completely dissolving 0.2 g of Polymer (F) in 1.8 g of cyclohexanone. The resulting solution was filtered through a 0.1-µm filter made of tetrafluoroethylene and then, spin-coated onto a silicon wafer. The resulting film was heated at 250°C for 60 seconds on a hot plate in a nitrogen stream and then cured (calcined) for 60 minutes in an oven of 400°C purged with nitrogen, whereby a 0.5-µm thick film was obtained. The film however had foreign matters formed therein. The dielectric constant of the film thus obtained was calculated from the capacitance value at 1 MHz by using a mercury probe (product of Four Dimensions) and "HP 4285A LCR meter" (trade name; product of Yokogawa Hewlett Packard), and it was 2.55. As a result of measurement by using "Nano Indenter SA2" (trade name; product of MTS Systems), the Young's modulus (at 25°C) of the film was 2.0 GPa.

Supposing that the mass of Polymer (F) was W1; the mass of Polymer (F), after heating from 25°C at a heating rate of 10°C/min in nitrogen and keeping the temperature at 400°C for 1 hour by using a TGA measuring apparatus "TGA Q500" (trade name; product of TA Instruments), was W2; and the mass of Polymer (F) after further heating for 2 hours at 400°C was W3, the polymer satisfied the following equations: W2/W1 = 0.65 and W3/W2 = 0.80.

Compared with the polymers obtained in Comparative Examples, the polymers of the invention have higher solubility in a solvent, capable of forming a film by spin coating more easily, and capable of providing an insulating film having no foreign matters formed therein and excellent in dielectric constant and Young's modulus.

The polymer of the invention having a cage structure is soluble in a coating solvent such as cyclohexanone and can provide a uniform film forming composition free of precipitates. A film formed using the composition has a low dielectric constant and high mechanical strength so that it is suited as an interlayer insulating film for electronic devices or the like.

The entire disclosure of each and every foreign patent application from which the benefit of foreign priority has been claimed in the present application is incorporated herein by reference, as if fully set forth.

## Claims

1. A polymer obtained by polymerizing a hydrocarbon monomer in a presence of a polymerization accelerator,
wherein the polymer has stability at 400°C.

2. The polymer according to claim 1, which has a solubility, at 25°C in cyclohexanone or anisole, of 3 mass% or greater.

3. The polymer according to claim 1, which is obtained by polymerizing, in a presence of a polymerization initiator, a compound having a cage structure with at least 11 carbon atoms and a carbon-carbon triple bond.

4. The polymer according to claim 3,
wherein the compound having a cage structure is represented by formula (I): 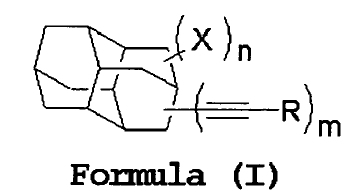 wherein when two or more R's are present, the R's each independently represents a hydrogen atom, an alkyl group, an alkenyl group, an alkynyl group, an aryl group, an alkoxycarbonyl group, an aryloxycarbonyl group, a carbamoyl group, an acyl group or a silyl group;
m represents an integer of from 1 to 14;
X represents any substituent; and
n represents an integer of from 0 to 13.

5. The polymer according to claim 3,
wherein the polymerization initiator is selected from the group consisting of organic peroxides and azo compounds.

6. A film forming composition comprising a polymer according to claim 1.

7. A film forming composition comprising:
a compound having a cage structure with at least 11 carbon atoms and a carbon-carbon triple bond; and
a polymerization initiator.

8. An insulating film formed by utilizing a film forming composition according to claim 6.

9. An electronic device comprising an insulating film according to claim 8.

10. An insulating film formed by utilizing a film forming composition according to claim 7.

11. An electronic device comprising an insulating film according to claim 10.
